Europäisches Patentamt

European Patent Office

Office européen des brevets

(11) Publication number: **0 275 659**
A1

# EUROPEAN PATENT APPLICATION

(21) Application number: 87310952.4

(22) Date of filing: 14.12.87

(51) Int. Cl.⁴: **B64G 1/24** , G05D 1/08 , H02K 44/02

(30) Priority: 12.12.86 GB 8629708

(43) Date of publication of application:
27.07.88 Bulletin 88/30

(84) Designated Contracting States:
DE FR IT NL SE

(71) Applicant: THE MARCONI COMPANY LIMITED
The Grove Warren Lane
Stanmore Middlesex HA7 4LY(GB)

(72) Inventor: Cope, Paul Edward George
6 Crest Close
Fareham Hampshire, PO16 8RZ(GB)

(74) Representative: MacKenzie, Ian Alastair
Robert
The General Electric Company, p.l.c. Central
Patent Department Wembley Office Hirst
Research Center East Lane
Wembley Middlesex HA9 7PP(GB)

(54) Attitude control actuator.

(57) An attitude control actuator for a space craft comprises a loop (10) containing a liquid and means for placing the liquid in controlled motion around the loop. The means may comprise an electromagnetic pump (14) in which case the liquid itself is conductive or an electric motor 50 driving a multipole magnet acting on ferromagnetic balls housed in the loop (10).

*Fig.1.*

## Attitude Control Actuator

The present invention concerns a device for controlling the attitude of space vehicles, and in particular earth orbiting satellites.

It is already well known to control the manoeuvring of satellites either by gas reaction thrusters or by momentum or reaction wheels. These known methods perform well in many circumstances. However, certain applications call for agile manoeuvring of satellites so as to make the best use of limited available time.

The problems of the prior arrangements in meeting this requirement can be appreciated from the following.

Consider a satellite having moment of inertia, I, measured in $m^2kg$, and which is required to make N manoeuvres through an average angle of 1.0 radian in T seconds of lifetime. Suppose further that in order to achieve the aforesaid objective of making the best use of available observation time the time spent on manoeuvering is constrained not to exceed 20 percent of the whole lifetime, T, then the time available per manoeuvre is of the order of $T/5/N$.

If gas reaction thrusters are used to effect such manoeuvres then the fuel optimal strategy is to use a brief but intense thrust to initiate and to terminate each manoeuvre, the satellite being allowed to coast at constant angular velocity during the intervening manoeuvre period. This is known as a bang-coast-bang strategy. This result follows from the proportionality between fuel used and angular velocity change; velocity change is minimised at twice the coast velocity by the bang-coast-bang strategy for a given manoeuvre amplitude and duration. The total fuel used during the life is therefore $10.N^2.I/T.V.R$ kg where V is the specific impulse of the gas thruster in N.s/kg and R is the thruster mounting radius in metres. Taking the example of a large scientific satellite having a transverse moment of inertia of 20000 $m^2kg$ and required to make 30 manoeuvres per day for 2 years (i.e. N = 22000 and T = 63000000s) using hydrazine thrusters giving 2000 N.s/kg of specific impulse then the total propellant needed for manoeuvring amounts to over 300 kg which is a disproportionately large part of what might be a 1500 kg satellite.

If reaction wheels are used to effect such manoeuvres then the performance achievable may be limited by either the torque capability or the total angular momentum capability of the wheel used. To minimise the peak torque required a constant angular acceleration/deceleration strategy becomes appropriate. Taking the same example as for the gas reaction thruster, the manoeuvre duration can be calculated to be 576 seconds, 288s of acceleration and 288 of deceleration. Since the total manoeuvre angle assumed is 1 radian then the maximum angular momentum reached is 70 N.m.s and the torque required is 0.25 N.m. The largest available wheel in Europe is the Aerospatiale 100 N.m.s momentum wheel which uses magnetic bearings and runs at 400 rev/s at full angular momentum. To generate the required torque at 70% of maximum speed assuming 70% efficiency in the wheel motor would require an input power of over 600W which is even more disproportionate in what might be a 1000W satellite than the gas reaction thruster propellant.

The present invention has for an object to provide an attitude control system which has the potential of good response times without the mass or power constraints imposed by the prior arrangements.

Accordingly the present invention consists in an attitude control actuator for a spacecraft, the actuator comprising a loop containing a liquid, and means for placing the liquid in controlled motion around the loop.

In accordance with a feature of the invention the means for placing the liquid metal in motion around the loop may comprise an electromagnetic pump. The pump may be an alternating current pump.

In order that the present invention may be more readily understood two embodiments thereof will now be described by way of example and with reference to the accompanying drawings in which:

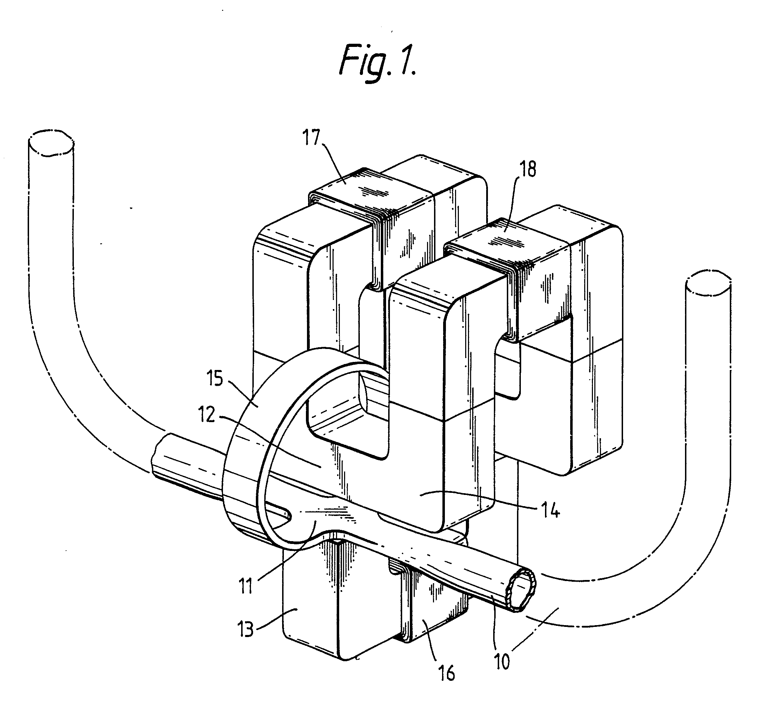

Figure 1 is an isometric view of an attitude control system incorporating the present invention, and

Figure 2 is a plan view of an alternative pumping mechanism.

Referring now to Figure 11 this shows an actuator comprising a tube 10 containing a loop of electrically conductive liquid metal. The metal can be mercury or a eutectic metal alloy. The tube 10 has a crcuiform joint 11 which is flattened between the poles 12, 13 of an electromagnetic pump 14. The joint 11 allows a conducting connection between the liquid in the tube 10 and a conducting fluid "turn" 15 wound once around the core of the electromagnetic pump. A primary winding 16 serves both to generate a field between the poles 12, 13 at joint 11 and to generate a transverse current in the conducting liquid where it lies in the field. This generates a transverse current in the liquid so creating a propulsive pressure differential in the liquid by the electromagnetic effect. This transverse current and the consequent propulsive pressure arise only if the symmetry of the pump is destroyed by loading one of a pair of secondary coils 17, 18 so diverting flux through the turn 15 in one direction or the other.

The field and current in the pump reverse during the alternating cycle at approximately the same time so that the propulsive pressure is unidirectional in sign though fluctuating in magnitude. By chosing a high drive frequency to the primary winding 16 the effect of these fluctuations can be minimised whilst, at the same time, the copper losses in the electromagnet are reduced.

For drive in the reverse direction the alternate secondary winding 16 or 17 is loaded. Under satellite manoeuvring conditions deceleration will occur naturally at a sufficiently rapid rate without such a recourse in most applications.

So, using general geometrical and mechanical relationships and the Darcy and Blasius relationships for turbulent flow pressure drop in a smooth tube we obtain.

Radius of tube, $r = sqr(m/rho/pi/l)$

where m is the mass of fluid, rho its density, pi = 3.14159&c and l the circumferential length of the tube. The moment of inertia of the fluid, I, is given by:

$I = m.1.1/4/pi/pi$

assuming the loop to be circular. The required angluar velocity of rotation of the loop fluid about the loop ventre, w, for a given angular momentum, H, is: $w = H/I$

and the Reynolds number is given by: $Re = 2.rho.u.r/eta$

where eta is the dynamic viscosity. The friction factor, f, is given by the Blasius relation

$f = 0.079/sqr(sqr(Re))$

and the pressure head required follows from the Darcy equation

$h = f.l.u.u/r/g$

The volume flow rate, Q, is given by

$Q = u.pi.r.r$

and the power required to maintain the flow, W, by

$W = Q.rho.g.h$

Substituting in these equations the following parameters:

mass of liquid, m, per loop    9.0 kg
angular momentum required, H   ·35 N.m.s.
diameter of loop, 1/2/pi   2.2 m
density of NaK eutectic   863 kg/m/m/m
   dynamic viscosity of NaK 0.000933N.s/m/m/rad

we obtain: Power W = 37.5W, stored energy, $H.H/2/I = 29J$

For 70 Nms the power would be of the order of 150W. Thus the power dissipated against viscosity in this example exceeds the rotational energy increase rate. This indicates an optimisation is possible by accelerating more quickly and so reducing the peak velocity, reducing the viscous power loss as the square. If a strategy approaching the bang-coast-bang approach is adopted then the angular momentum is halved and the sustaining power is reduced to a quarter, i.e. 37.5W. The stored energy at 35 N.m.s. is H.w/2 which evaluates to be 29 Joule. With the fluid loss at 15W this gives a time constant of 0.8 seconds for acceleration which is so much less than the typical manoeuvre duration of half an hour that the original bang-coast-bang approximation becomes quite closely true. This strategy for the fluid loop actuator may be termed the drive and sustain approach deceleration being a natural process simply requiring power shut-off at the correct time in advance of slew termination. Again even 75W, for the worst axis is affordable in a 1000 W overall power budget, allowing for 50% inefficiency in the electromagnetic pump.

For some applications greater inroads into the spacecraft budgets could be permissible in the interests of agility. Assuming 20 kg of mass could be afforded and 200 W of power (during manoeuvres only) then the slew rate would rise from 0.1 degree per second to over 1 degree per second. To achieve this speed with gas reaction thrusters would require 200 gm per manoeuvre allowing only 90 manoeuvres in the whole lifetime before the fluid loop actuator in any case became lighter.

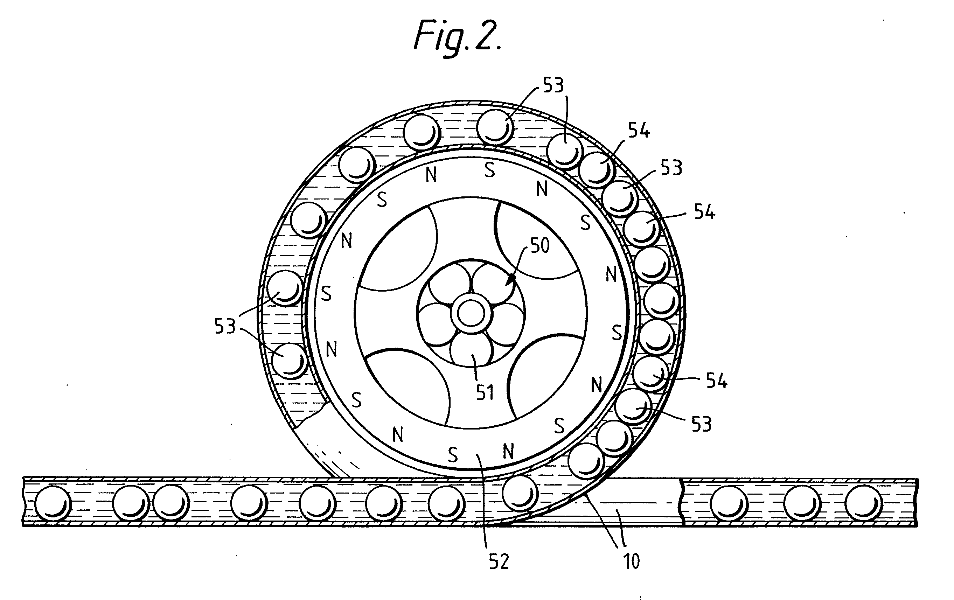

Referring now to Figure 2 of the drawings, this shows an alternative embodiment which, in the place of an electromagnetic pump, a conventional high efficiency brushless D.C. motor generally indicated at 50, the rotor of motor 50 being supported by roller bearings 51. Motor 50 is used to rotate a multi-pole field magnet 52. Drive is given to the fluid in the fluid loop by the action of the field magnet 52 on a plurality of neutrally buoyant ferromagnetic balls 53. The balls 53 may be manufactured from a number of different materials. For example they can be of a hollow soft alloy, of ferrite or resin-bonded powder. The balls are sized so that they are an easy fit within the tube 10 containing the fluid which is to be circulated to provide angular momentum reaction for manoeuvring the spacecraft. It will be appreciated that as field magnet 52 is rotated by motor 50 the balls will be moved under the magnetic influence of the multiple poles of the field magnet.

Optionally the ferromagnetic balls 53 may be interspaced with non-magnetic balls 54 of similar size and density. This is to prevent aggregation of the magnetic balls into groups of two or more and thus substituting rolling for sliding friction between the balls.

It is also apparent that the pipe or tube 54 may be underfilled with balls so that there may result some unfilled sites opposite pole pieces of the field magnet 52 in the pumping area. However this will only result in a slight loss in pumping efficiency provided that there are sufficient magnetic balls to prevent gross leakage in the pumping region. This embodiment has a potentially high degree of efficiency since the prime mover is an efficient D.C. motor. It also enables a much wider choice of fluid since electrical conductivity in the fluid is no longer a requirement.

## Claims

1. An attitude control actuator for a spacecraft, and characterised in that it comprises a loop (10) containing a liquid, and means for placing the liquid in controlled motion around the loop.

2. An actuator as claimed in Claim 1, and characterised in that the liquid is a conductive liquid metal and in that the means for placing the liquid in motion comprises an electromagnetic pump (14).

3. An actuator as claimed in Claim 2, and characterised in that the electromagnetic pump (14) has two alternate flux paths provided by a pair of windings.

4. An actuator as claimed in Claim 3, and characterised in that the electromagnetic pump (14) has a pair of poles (12, 13) located one on either side of a cruciform joint (11) in the loop (10), a conducting fluid turn (15) forming part of said joint being wound once around the core of said electromagnetic pump.

5. An actuator as claimed in Claim 1, and characterised in that the means for placing the liquid in motion comprise an electric motor (50) driving a multi-pole magnet 52, and a plurality of ferromagnetic balls 53 located in the liquid and movable under the influence of said magnet 52.

# Fig. 1.

# Fig.2.

0 275 659

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 091 417 (MIKSCH)<br>* column 1, lines 10-57; column 3, line 55 - column 4, line 49; figure 1 *<br>--- | 1 | B 64 G 1/24<br>G 05 D 1/08<br>H 02 K 44/02 |
| X | US-A-2 856 142 (HAVILAND)<br>* whole document *<br>--- | 1,2 | |
| X | US-A-3 226 062 (DAVIS)<br>* column 1, line 60 - column 2, line 13; column 3, line 24 - column 4, line 31; claims 1, 2; figures 1, 2 *<br>--- | 1,2 | |
| A | GB-A-2 034 981 (NOVATOME)<br>* abstract; page 1, lines 5-42; page 2, lines 5-61; figures 1, 2; claims 1, 4 *<br>--- | 3,4 | |
| A | PATENT ABSTRACTS OF JAPAN, vol. 7, no. 99 (E-172)[1244], 27th April 1983; & JP - A - 58 019 157 (HITACHI SEISAKUSHO) 04-02-1983<br>--- | 5 | |
| A | DE-C- 319 231 (HARTMANN)<br>* page 2, lines 35-61; page 4, lines 95-109; figures 3, 17; claims 1, 2 *<br>----- | 3,4 | TECHNICAL FIELDS SEARCHED (Int. Cl.4)<br><br>B 64 G<br>H 02 K<br>G 05 D |

The present search report has been drawn up for all claims

| Place of search | Date of completion of the search | Examiner |
|---|---|---|
| BERLIN | 28-03-1988 | BEITNER M.J.J.B. |